# EUROPÄISCHE PATENTSCHRIFT

(11) **EP 4 600 103 B1**
(45) Veröffentlichungstag und Bekanntmachung des Hinweises auf die Patenterteilung: **06.05.2026**
(21) Anmeldenummer: 24157019.1
(22) Anmeldetag: 12.02.2024
(51) Int. Cl.: B60W 30/14, B60W 50/08, B60W 60/00, G01C 21/00, B60W 50/00

(54) **VERFAHREN ZUR GESCHWINDIGKEITSREGELUNG**
METHOD FOR SPEED CONTROL
PROCÉDÉ DE RÉGULATION DE VITESSE

(43) Veröffentlichungstag der Anmeldung: 13.08.2025
(73) Patentinhaber: MAGNA Automotive Europe GmbH, 1120 Wien (AT)
(72) Erfinder: GROSSBICHLER, Martin, 4421 Aschbach/Steyr (AT); GALKINA, Anastasiia, 4040 Linz (AT); TKACHENKO, Pavlo, 4040 Linz (AT); ZHENG, Yanggu, 5205 Schleedorf (AT); HOEFER, Christoph, 4483 Hargelsberg (AT); NGUYEN, Ngoc Anh, 8045 Graz (AT)
(74) Vertreter: Zangger, Bernd

(56) Entgegenhaltungen:
- WO-A1-2021/089150
- US-A1- 2021 070 317
- US-A1- 2021 331 671
- US-A1- 2023 373 530
- US-B2- 9 081 651

## Beschreibung

### Gebiet der Erfindung

Die vorliegende Erfindung betrifft ein Verfahren zur Geschwindigkeitsregelung eines bodengebundenen Fahrzeugs und eine Regelungsvorrichtung zur Geschwindigkeitsregelung eines bodengebundenen Fahrzeugs.

### Stand der Technik

Verfahren zur Geschwindigkeitsregelung von Kraftfahrzeugen sind an sich bekannt und können den Fahrer eines Fahrzeugs bei der Längsführung unterstützen. Geschwindigkeitsregelanlagen regeln die Geschwindigkeit des Fahrzeugs auf einen Geschwindigkeitssollwert, wobei eine vorgesehene Fahrstrecke berücksichtigt werden kann.

Zur Berechnung einer optimalen Geschwindigkeit kann beispielsweise ein so genanntes Optimalsteuerungsproblem gelöst werden, was allerdings insbesondere für Antriebssysteme von Hybridfahrzeugen auf vergleichsweise langen Fahrstrecken, zum Beispiel auf Fahrstrecken von mehr als 100 km, mit einem hohen Rechenaufwand verbunden ist, um diese Berechnungen in einer angemessenen Zeit, zum Beispiel in weniger als 10 Sekunden, durchzuführen, insbesondere mittels der derzeit in Hybridfahrzeugen verfügbaren Rechenleistung.

Besonders für selbstfahrende Fahrzeuge sowie für Fahrzeuge mit adaptiver Geschwindigkeitsregelung (ACC) wäre eine effiziente und gleichzeitig für den Fahrer komfortable Geschwindigkeits-, Beschleunigungs- und/oder Ruckplanung, also die Bestimmung einer optimalen Fahrzeugzustandstrajektorie wünschenswert. Einerseits soll die Trajektorie so schnell wie möglich geplant bzw. berechnet werden, um eine kurze Planungszeit und einen langen Planungshorizont zu ermöglichen, andererseits sollen verschiedene Fahrbedingungen wie Straßenneigung, Anwesenheit eines anderen vorausfahrenden Fahrzeugs auf der Straße, Fahrerkomfort usw. berücksichtigt werden können, um ein gutes Fahrzeugverhalten zu erreichen. Darüber hinaus sollte die Möglichkeit zur Senkung des Energieverbrauchs sowie die Berücksichtigung anderer Verkehrsteilnehmer zur Vermeidung von Kollisionen und potenziell unsicheren Situationen in Betracht gezogen werden. Eine optimale Trajektoriengenerierung für autonom fahrende Fahrzeuge und Fahrzeuge mit ACC gibt es derzeit noch nicht.

Aus dem Dokument US 9 081 651 B2 ist ein Verfahren zur Geschwindigkeitsregelung bekannt.

### Zusammenfassung der Erfindung

Es ist eine Aufgabe der Erfindung, ein Verfahren zur Geschwindigkeitsregelung eines bodengebundenen Fahrzeugs und eine Regelungsvorrichtung zur Geschwindigkeitsregelung eines bodengebundenen Fahrzeugs in dieser Hinsicht zu verbessern und insbesondere ein entsprechendes Verfahren und eine Vorrichtung anzugeben, die sowohl ein gutes Fahrverhalten des Fahrzeugs als auch eine rasche Berechnung ermöglichen.

Die Erfindung ist im beigefügten Anspruchssatz beschrieben.

Das Betreiben des Fahrzeugs mit dem finalen Geschwindigkeitssollwert kann insbesondere dadurch erfolgen, dass aus dem Geschwindigkeitssollwert und/oder einem davon abhängigen Beschleunigungssollwert eine Anforderung eines Drehmoments berechnet wird.

Die Geschwindigkeitsregelung eines Kraftfahrzeugs erfolgt durch ein zumindest zweistufiges Verfahren, wobei die erste Stufe in zwei Alternativen ausgeführt werden kann: in einer ersten Stufe wird wahlweise, insbesondere ausgewählt von einem übergeordneten Verfahren oder einer übergeordneten Steuereinheit, entweder über einen sogenannten Makroplaner, über eine einfache Vorwärts-Rückwärts-Geschwindigkeitsplanung ein Geschwindigkeitssollwert ermittelt. Alternativ wird stattdessen der Geschwindigkeitssollwert von einem Mesoplaner-Modul bestimmt, das eine Optimierung von Fahrtzeit und Energieverbrauch des Fahrzeugs vornimmt. Der resultierende Geschwindigkeitssollwert wird von einer zweiten Stufe, dem Mikroplaner-Modul, noch weiter optimiert, die Fahrzeuge in der Umgebung des eigenen Fahrzeugs berücksichtigt, insbesondere ein vorausfahrendes Fahrzeug, so dass ein Sicherheitsabstand bewahrt werden kann und Kollisionen vermieden werden. Das Makroplaner-Modul und das Mesoplaner-Modul zusammen bilden einen Geschwindigkeitsplaner. Das Ausgangssignal des Geschwindigkeitsplaners kann durch den Mikroplaner, als Abstandsplaner bzw. als Abstands- und Geschwindigkeitsplaner, modifiziert werden.

Der Makroplaner basiert auf einem schnellen Vorwärts-Rückwärts-Geschwindigkeitsplaner und liefert optimale Steuerungssollwerte, ohne dass ein rechenaufwändiger Optimierungslöser verwendet werden muss. Der Mesoplaner minimiert sowohl die Fahrzeit als auch den Energieverbrauch, bevorzugt ohne Verwendung eines speziell entwickelten Optimierungslösers, und kann vorzugsweise mit einem Open-Source-Optimierungslöser in Form eines nichtlinearen Programms unter Verwendung beispielsweise der Standardsoftware CasADi mit IPOPT-Solver auf einem Linux-basierten System realisiert werden. Die Generierung optimaler Energieregelungs-Sollwerte ist dann einfach. Sie erlaubt es bevorzugt nicht, spezielle Fahrzeugkonstruktionen zu berücksichtigen, aber sie ermöglicht dennoch Energieeinsparungen durch eine sehr einfache Formulierung und Umsetzung auch für Elektrofahrzeuge (BEV).

Sowohl der Makroplaner als auch der Mesoplaner können verschiedene Arten von zusätzlichen daten- oder fahrerorientierten Bedingungen, beispielsweise Begrenzungen, verwenden, die sowohl Komfort als auch sichere optimale Kontrollwerte bieten. Die fahrerorientierten Bedingungen können je nach bevorzugter Fahrweise des Fahrers einfach parametriert werden. Somit ist der Geschwindigkeitsplaner flexibel in seiner Anpassung und kann beispielsweise an bestimmte Ziel-Fahrzeuge angepasst werden.

Der geplante optimale Regelungssollwert wird durch den Mikroplaner mit einer Abstandsregelung stabilisiert. Für den Mikroplaner wird eine einfachere Formulierung des Optimierungsproblems verwendet, um ihn für Embedded Software geeignet zu machen, zum Beispiel durch Verwendung von C-Code, der beispielsweise mit dem Open-Source-Löser qrqp generiert wird. Wenn keine Abstandsregelung benötigt wird, kann stattdessen eine PI-Regelung verwendet werden. Eine flachheits-basierte, also flatnessbasierte Formulierung von Mikroplaner ermöglicht die Eliminierung der Systemdynamik aus den Nebenbedingungen, was zu einer reduzierten Berechnungszeit führt. Die Funktion der Abstandsregelung in Mikroplaner ermöglicht die Verwendung des Trajektorienplaners der oberen Schicht bei Vorhandensein anderer vorausfahrender Fahrzeuge.

Vorteile die mit einem erfindungsgemäßen Verfahren verwirklicht werden können sind:
Der Geschwindigkeitsplaner für ein bestimmtes Fahrzeug kann je nach HW-Leistung und Fahrerpräferenzen ausgewählt werden. Auf Komfort und Fahrerkompetenz basierende Einschränkungen bzw. Bedingungen, die den Fahrstil des selbstfahrenden BEV bestimmen, können vom Fahrer über eine Mensch-Maschine-Schnittstelle (HMI) leicht angepasst werden. Eine effiziente Formulierung der modellprädiktiven Abstands- und Geschwindigkeitsregelung (Mikroplaner) ist in der Lage, andere Verkehrsteilnehmer auf der Straße zu berücksichtigen.

Das Verfahren ist anwendbar auf batteriebetriebene Elektrofahrzeuge (BEV) in Form einer einheitlichen Lösung. Die Planung optimaler Steuerungssollwerte für selbstfahrende Autos ist ohne einen speziellen Optimierungslöser möglich. Das Verfahren ist direkt für ACC anwendbar. Eine Abstandskontrolle ist möglich. Das Verfahren ermöglicht leicht einstellbare Komfort- und fahrerorientierte Bedingungen.

Der Begriff "bodengebundenes Fahrzeug" umfasst Straßenfahrzeuge und Schienenfahrzeuge. Das Verfahren eignet sich insbesondere für Elektro- und Hybridfahrzeuge.

Weiterbildungen der Erfindung sind in den abhängigen Ansprüchen, der Beschreibung sowie den beigefügten Zeichnungen angegeben.

### Kurzbeschreibung der Zeichnungen

Die Erfindung wird im Folgenden beispielhaft unter Bezugnahme auf die Zeichnungen beschrieben.
- Fig. 1: ist ein Blockdiagramm eines erfindungsgemäßen Verfahrens zur Geschwindigkeitsregelung eines bodengebundenen Fahrzeugs.
- Fig. 2: ist eine schematische Darstellung verschiedener Bedingungen und Begrenzungen für ein erfindungsgemäßes Verfahren.
- Fig. 3: zeigt Formeln zur Berechnung des Geschwindigkeitssollwerts durch den Makroplaner in einem erfindungsgemäßen Verfahren.
- Fig. 4: zeigt Formeln zur Berechnung der Beschleunigung zur Berechnung des Geschwindigkeitssollwerts gemäß Fig. 3.
- Fig. 5: zeigt Formeln zur Lösung des Optimierungsproblems durch den Mesoplaner in einem erfindungsgemäßen Verfahren.
- Fig. 6: ist eine schematische Darstellung verschiedener Bedingungen und Begrenzungen, bezogen auf die Fahrerkompetenz und auf Fahrmodi, für den Mesoplaner eines erfindungsgemäßen Verfahrens.
- Fig. 7: ist eine schematische Darstellung der Abhängigkeit der Fahrzeit T, des Komforts K und des Energieverbrauchs E von den gewählten Fahrmodi bei Anwendung eines erfindungsgemäßen Verfahrens.
- Fig. 8: ist ein Blockdiagramm eines Mikroplaners als modellprädikative Regelung (MPC) mit Abstands- und Geschwindigkeitsregelung eines erfindungsgemäßen Verfahrens.
- Fig. 9: zeigt Formeln zur Berechnung des Geschwindigkeitssollwerts durch den Mikroplaner als modellprädikative Regelung (MPC) in Form einer Multiple-Shoot-Formulierung und im Zeitbereich in einem erfindungsgemäßen Verfahren.
- Fig. 10: zeigt Formeln zur Berechnung des Geschwindigkeitssollwerts durch den Mikroplaner als modellprädikative Regelung (MPC) bei Transformation auf flächenbasierte Koordinaten, in einem erfindungsgemäßen Verfahren.

### Detaillierte Beschreibung der Erfindung

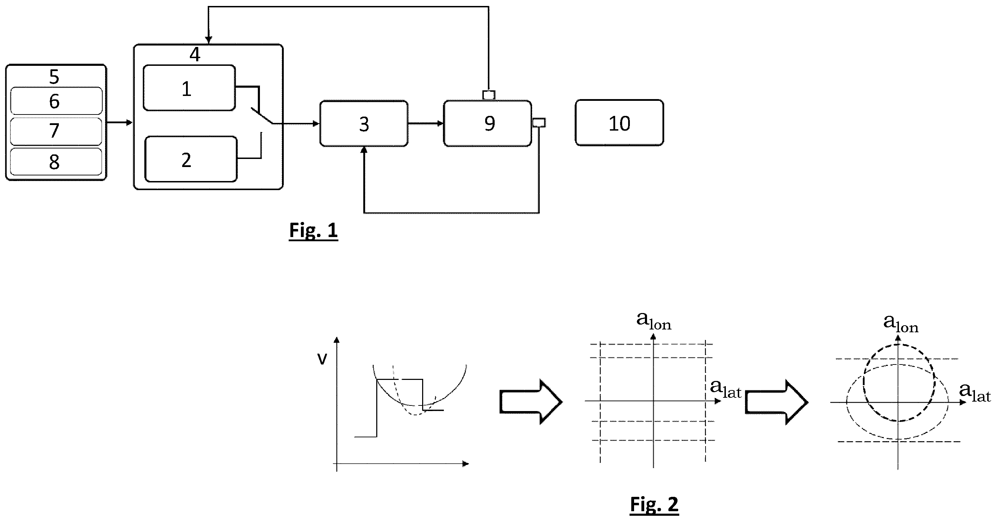

In Fig. 1 ist ein erfindungsgemäßes Verfahren zur Geschwindigkeitsregelung eines bodengebundenen Fahrzeugs schematisch, als Blockdiagramm, dargestellt.

Der allgemeine Ansatz besteht aus drei verschiedenen Modulen bzw. Algorithmen, dem Makroplaner 1 mit einem schnellen Vorwärts-Rückwärts-Geschwindigkeitsplaner, dem Mesoplaner 2 in Form eines optimierungsbasierten optimalen Energie-Geschwindigkeitsplaners, also mit einem Optimierungslöser, und einer modellprädiktiven Abstands- und Geschwindigkeitsregelung, dem Mikroplaner 3, der auch fallweise durch einen PI-Regler (proportional-integral controller) gebildet werden kann, wenn keine Abstandsregelung erforderlich ist oder die Zielhardware aufgrund der Rechenzeit nicht für eine modellprädiktive Abstands- und Geschwindigkeitsregelung geeignet ist. Der Makroplaner 1 und der Mesoplaner 2 bilden zusammen einen Geschwindigkeitsplaner 4. Verschiedene Bedingungen und Begrenzungen 5 können in dem Geschwindigkeitsplaner 4 und somit in den Planern 1 und/oder 2 berücksichtigt werden.

Der Geschwindigkeitsplaner 4 generiert auf der Grundlage seiner Parametrisierung und der Auswahl der Bedingungen und Beschränkungen 5 für den Planer, wie Fahrbahnbedingungen und Fahrbahnregulierungen 6, Fahrer- und komfortorientierte Begrenzungen 7 und Antriebsstrangbegrenzungen 8, optimale Steuerungssollwerte für selbstfahrende Elektrofahrzeuge (BEV) oder ACC Fahrzeuge unter Verwendung der Informationen über die Straße und den zu fahrenden Weg. Bei Vorhandensein anderer Fahrzeuge muss auch der Abstand zwischen dem eigenen Fahrzeug 9 (ego Fahrzeug) und dem vorausfahrenden Fahrzeug 10 kontrolliert werden, um eine sichere Fahrt zu gewährleisten. Zu diesem Zweck wird eine modellprädiktive Abstands- und Geschwindigkeitsregelung in Form des Mikroplaners 3 verwendet. Der Geschwindigkeitsplaner 4 liefert die gewünschte optimale Referenzgeschwindigkeit für das eigene Fahrzeug 9. Die modellprädiktive Abstands- und Geschwindigkeitsregelung 3 erzeugt die Referenzbeschleunigung für den elektrischen Antriebsstrang. Wenn der Abstand zwischen eigenem Fahrzeug 9 und vorausfahrendem Fahrzeug 10 nahe einem minimalen Sicherheitsabstand liegt, wird die Referenzgeschwindigkeit aus dem Geschwindigkeitsplaner 4 beispielsweise ignoriert und der Abstand so geregelt, dass er auf einem angemessenen Sicherheitsniveau bleibt.

Die Verwendung dieser drei Algorithmen 1, 2 und 3 bietet eine flexible Planungs- und Steuerungsfunktionalität in Abhängigkeit von den Fahrbedingungen und der Zielhardware für den Geschwindigkeitsplaner.

Für den Fall, dass die optimale Referenzgeschwindigkeit für einen langen Horizont mit geringer Rechenzeit geplant werden muss, wird der Makroplaner 1 auf der Grundlage eines schnellen Vorwärts-Rückwärts-Geschwindigkeitsplaners aktiviert. Zum Beispiel werden für 70 km mit Kreislängs- und Querbeschleunigungsbeschränkungen nur 3,7 s benötigt, um die geplante optimale Geschwindigkeit zu berechnen. Die Schnittstelle des Planers kann folgendes umfassen: Eingabe (Vektor), Entfernung, Krümmung, gesetzliche Grenzwerte, Piste, Ausgabe (Vektor), optimales Geschwindigkeitsprofil, Längsbeschleunigungsprofil, Zeitprofil, Parameter, Fahrerverhalten, Antriebsstrang, Bremse, Fahrzeug (Radstand, Spurweite, Schwerpunkt usw.).

Eine Möglichkeit der Bereitstellung von Randbedingungen 5 im Pfadbereich s ist in Fig. 2 dargestellt und kann wie folgt beschrieben werden:
Bild links: Begrenzung der Geschwindigkeit v. Berechnung der Höchstgeschwindigkeit (stufenförmige Linie) aus der maximalen Querbeschleunigung. Zur weiteren Verwendung des Minimums der gesetzlichen Höchstgeschwindigkeit und der kurvenabhängigen Höchstgeschwindigkeit.
Bild Mitte: Rechteck-Begrenzung der Beschleunigung a, wobei aₗₐₜ seitliche Beschleunigung und aₗₒₙ eine Längsbeschleunigung ist. Anwendung von Längsbeschleunigungsgrenzen aus allen Beschränkungen. Die Begrenzungen können beispielsweise gegeben sein durch Bremsen, Fahrer, Kurven, Antriebsstrang.
Bild rechts: Form-Begrenzung der Beschleunigung a. Anwendung einer aus Parametern abgeleiteten Form. Die Begrenzungen können beispielsweise gegeben sein durch Bremsen, Fahrer, Kurven, Antriebsstrang.

Zunächst wird der Vorwärts-Rückwärts-Planer durch eine erste Geschwindigkeitsschätzung initialisiert, um eine Geschwindigkeit zu erhalten, die nicht höher ist als die in den Bedingungen und Beschränkungen 5 für den Planer angegebenen Anfangsgrenzen. Anschließend wird ein iteratives Verfahren mit den folgenden Schritten ausgeführt:
Berechnen der Querbeschleunigung aₗₐₜ.
Prüfen der Beschleunigung aₗₐₜ in Übereinstimmung mit den Bedingungen und Beschränkungen 5 für den Planer.
Begrenzen der Längsbeschleunigung aₗₒₙ auf den Grenzwert.
Bestimmen der Geschwindigkeit v neu.
Das Minimum aus der Begrenzung und der berechneten Geschwindigkeit nehmen.

Für die Erhöhung der Geschwindigkeit wird eine Vorwärtsberechnung und für die Verringerung der Geschwindigkeit eine Rückwärtsberechnung durchgeführt. Der Berechnungsalgorithmus für Geschwindigkeit und Beschleunigung ist im Entfernungsbereich konzipiert. Die Geschwindigkeitsschätzung wird unter Berücksichtigung der bekannten Straßenkrümmung k durchgeführt.

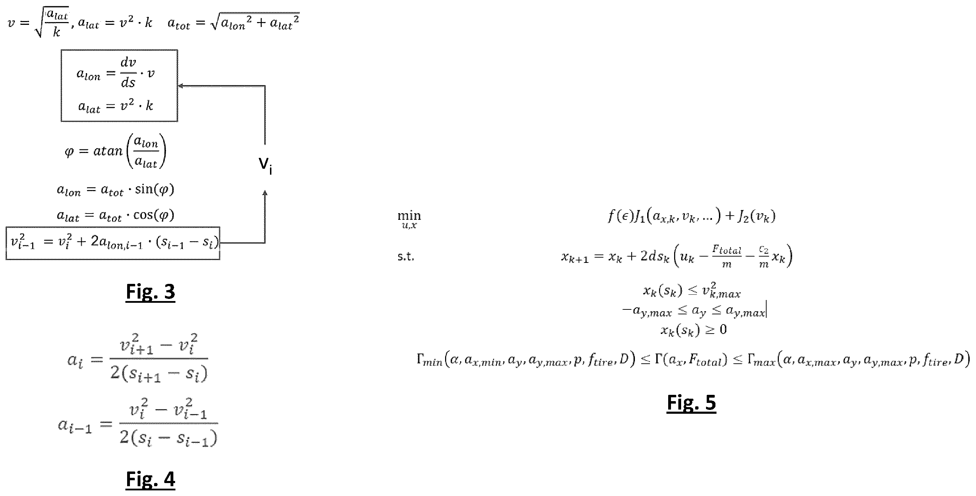

Die Berechnung kann mit den in Fig. 3 angegebenen Formeln durchgeführt werden.

Die für die Geschwindigkeitserhöhung benötigte Beschleunigung a wird durch Vorwärtsberechnung und die Verzögerung durch Rückwärtsberechnung auf der Grundlage der weiteren diskretisierten Gleichungen berechnet. Siehe Fig. 4.

Für den Fall, dass der Energieverbrauch bei der Maximierung der Geschwindigkeit minimiert werden soll, muss der Optimierungsbasierte Optimale Energie-Geschwindigkeitsplaner, der Mesoplaner 2, aktiviert werden. Er basiert auf der Lösung eines nichtlinearen Optimierungsproblems mit Hilfe des Open-Source-Programms CasADi mit dem Optimierungslöser IPOPT, ist aber nicht auf diesen Optimierungslöser beschränkt. Es kann beispielsweise auch ein anderer Open-Source-Optimierer für die Implementierung verwendet werden. Um die Fahrzeit zu minimieren, wird die Geschwindigkeit maximiert. Diese Annäherung ermöglicht eine Vereinfachung des ursprünglichen Zeitminimierungsproblems ohne Präzisionsverlust bei den optimalen Steuersollwerten. Alternativ kann die Fahrzeit unmittelbar minimiert werden, wobei ein lineares Vorhalten zwischen Gewichtsfactor ε und einer optimalen Geschwindigkeitssollwertreduktion im Eco Mode erreicht werden kann, das zu einer besseren und nutzerfreundlichen Parametrierung der Fahrmodi auf dem HMI führt. Das Optimierungsproblem ist in Fig. 5 dargestellt.

In dem Optimierungsproblem in Fig. 5 werden folgende Bezeichnungen verwendet, Kostenfunktionen J₁ und J₂ einschließlich der Maximierung der Geschwindigkeit bzw. des Energieverbrauchs mit Rekuperation, Fₜₒ₋ₜₐₗ=Fᵣₒₗₗ+F_{grade}, Fᵣₒₗₗ=mgcᵣ, F_{grade}=mg sin(ϕ), c₂=(c_{d} ρₐᵢᵣ A)/2, ε ein Gewichtungsfaktor ist, xₖ=υ² und uₖ=a_{x,k}. Der IPOPT-Löser wird verwendet mit xᵢₙᵢₜ (sₖ )=x_{prev,opt,interp} (sₖ ), wobei x_{prev,opt,interp} die interpolierte optimale Lösung aus der vorhergehenden geplanten Trajektorie ist. Die Kostenfunktion kann auch die Minimierung der Beschleunigung oder des Rucks beinhalten, um einen besseren Komfort zu gewährleisten.

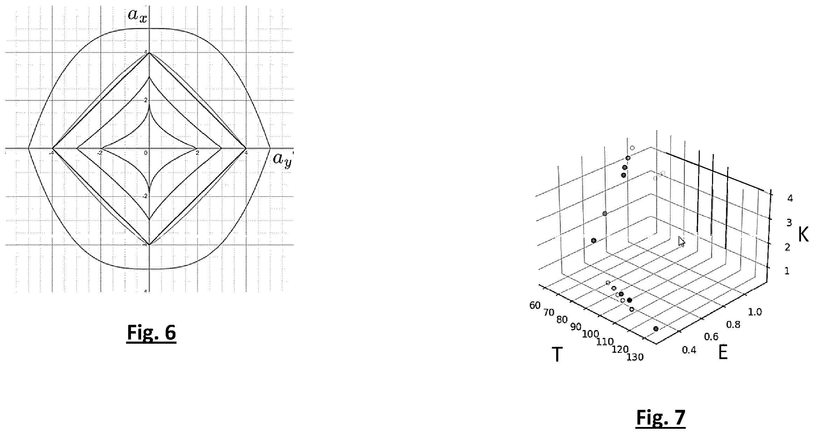

Die letzte Randbedingung im Optimierungsproblem kann aus der fahrer- und/oder komfortorientierten Begrenzung bestehen, wobei Γₘᵢₙ (α,a_{x,min},a_{y,}a_{y,max},p,fₜᵢᵣₑ ), Γ(aₓ,Fₜₒₜₐₗ) und Γₘₐₓ (α,a_{x,min},a_{y},a_{y,max},p,fₜᵢᵣₑ ) die Funktionen sind, die die verschiedenen Möglichkeiten der Beschränkungsformulierung beschreiben. Durch geeignete Wahl des Faktors p können dem optimierungsbasierten Mesoplaner für die optimale Energiegeschwindigkeit aus dem Block Bedingungen und Beschränkungen 4 verschiedene fahrerorientierte Stile zur Verfügung gestellt werden, siehe Fig. 6. p=1 entspricht der Raute. p<1 sind Funktionen innerhalb der Raute, p>1 entspricht den Funktionen außerhalb der Raute mit kreisförmiger Grenzfunktion.

Außerdem können verschiedene Fahrmodi definiert sein, zum Beispiel:
Eco: Energie sparen. Gewicht der Kostenfunktion ε = 750
Schnell: spart keine Energie, verkürzt die Reisezeit. Kostenfunktion Gewicht ε = 250
Komfort: Lat/Long acc/decel reduzieren. Gewicht der Kostenfunktion ε = 500
Sport: maximaler Breiten-/Längenanstieg/Abfall sind erlaubt. Kostenfunktion Gewicht ε = 250
Benutzerdefiniert: Gewicht der Kostenfunktion ε = 500

Es können Untermodi definiert werden:
Eco +: erhöht das Gewicht um 50
Fast +: verringert das Gewicht um 50
Komfort +: verringert die Fahrfertigkeit um 0,1
Sport +: erhöht die Min/Max-Werte für Beschleunigung bzw. Verzögerung um 0,5

Fig.6 zeigt somit eine mögliche Wahl der Bedingungen und Beschränkungen 4 auf der Grundlage der Fahrerkompetenz und der Fahrmodi.

Je nach gewähltem Verkehrsmittel können unterschiedliche Reisezeiten und Energieverbräuche erzielt werden, siehe Fig. 7, mit den Koordinaten: Reisezeit T, Energy E und Komfort K. Fig.7 zeigt eine Abhängigkeit der Fahrzeit T, des Komforts K und des Energieverbrauchs E von den gewählten Fahrmodi.

Der Block Bedingungen und Begrenzungen 5 für den Geschwindigkeitsplaner 4 kann auch verschiedene datengesteuerte Begrenzungen sowohl für den schnellen Vorwärts-Rückwärts-Geschwindigkeitsplaner 1 als auch für den optimierungsbasierten optimalen Energie-Geschwindigkeitsplaner 2 bereitstellen. Zum Beispiel kann die Reibung fₜᵢᵣₑ auf der Grundlage der Messungen geschätzt werden oder das erlernte Verhalten des Fahrers D kann zusätzlich in die Begrenzungen Γₘᵢₙ und Γₘₐₓ aufgenommen werden. Auch Einschränkungen für den Antriebsstrang wie die maximal mögliche Beschleunigung/Verzögerung werden von diesem Block bereitgestellt. Außerdem können zusätzliche Schlupfvariablen in die Randbedingungen aufgenommen werden, um die Bedingungen zu lockern und die Berechnungszeit zu verringern. Für die Strecke von 25,6 km dauert die Berechnung beispielsweise 0,9-1 s für p=1 und 1,1 s für p=0.2. Bei der Verwendung von ACC und für einen Horizont von 300 m dauert es beispielsweise 0,43 s, um optimale Geschwindigkeitssollwerte zu finden, die dem Mikroplaner 3 zur Verfügung gestellt werden.

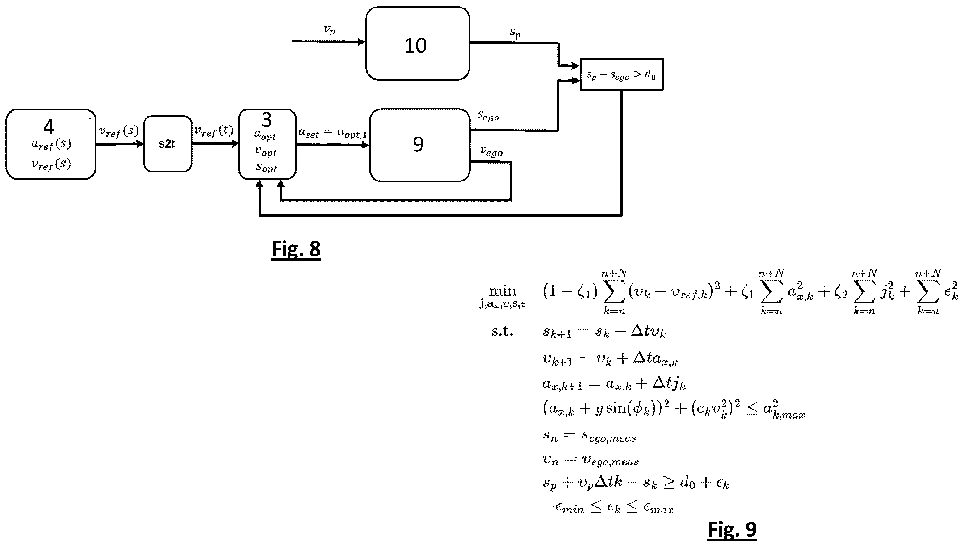

Die Aufgabe des Mikroplaners 3 ist es, die vom Geschwindigkeitsplaner 4 gelieferte optimale Referenzbewegung basierend auf den verfügbaren Messungen und Fahrsituationen zu stabilisieren. Die modellprädiktive Abstands- und Geschwindigkeitsregelung wird vorgeschlagen, um die vom Geschwindigkeitsplaner 4, zum Beispiel durch den schnellen Vorwärts-Rückwärts-Geschwindigkeitsplaner erzeugte optimale Referenztrajektorie zu verfolgen, und den Abstand vom eigenen Fahrzeug 9 zum vorausfahrenden Fahrzeug 10, also sₚ - s_{ego} , auf einer sicheren Grenze d₀ zu halten. Diese Aufgabe kann durch MPC gelöst werden. Die erzeugte Referenztrajektorie im Pfad s Bereich kann im Zeit t Bereich neu berechnet werden, siehe Fig. 8.

Fig. 8 zeigt ein Blockdiagramm des Mikroplaners 3 mit Abstands- und Geschwindigkeitsregelung.

Die MPC in Form einer Multiple-Shoot-Formulierung und im Zeitbereich kann formuliert werden wie in Fig. 9 dargestellt.

Dabei sind j=[jₙ,...,j_{n+N}], aₓ=[a_{x,n},...,j_{x,n+N}], u=[uₙ,...,u_{n+N}] und s=[sₙ,...,s_{n+N}] Ruck, Längsbeschleunigung, Fahrzeuggeschwindigkeit bzw. Bahnvektoren. Die Kostenfunktion kann mit Hilfe der Gewichtungsfaktoren ζ₁ und ζ₂. Die Ungleichheitsbedingungen können durch Schlupfvariablen gelockert werden, zum Beispiel durch ε=[εₙ,...,ε_{n+N}].

Eine Möglichkeit, die Anzahl der Optimierungsvariablen zu reduzieren, besteht darin, die vorhergesagten Zustände als Funktion des Steuereingangs auszudrücken. Auf diese Weise ist die Kostenfunktion nur eine Funktion der Steuereingabe j. Während die Auswertung der Vorhersagefunktion zusätzliche Rechenkomplexität einführt, wird die Reduzierung durch die verringerte Dimensionalität des Problems sowie die reduzierte Anzahl von Gleichheitsbedingungen ermöglicht. Darüber hinaus können zusätzlich die Nebenbedingungen für die Geschwindigkeitsdifferenz zwischen dem eigenen und dem vorausfahrenden Fahrzeug hinzugefügt werden, um eine glattere Abstandsregelung zu ermöglichen. Dieser Ansatz kann mit Hilfe des quelloffenen optimalen quadratischen Lösers qrqp realisiert werden, ist aber nicht auf diesen Löser beschränkt und kann auch mit anderen quadratischen oder nichtlinearen Lösern gelöst werden.

Eine weitere Möglichkeit, die Anzahl der Gleichheitsbedingungen zu reduzieren, die für die Beschreibung der Fahrzeugdynamik erforderlich sind, besteht darin, das ursprüngliche diskrete dynamische System so in flächenbasierte Koordinaten zu transformieren, dass alle Systemzustände und Systemeingaben statische algebraische Funktionen des flachen Systemausgangs sind yₖ.

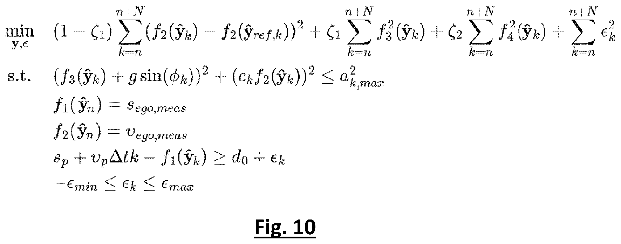

In Fig. 10 sind
sₖ=f₁ (y *k̂*), uₖ₌f₂ (y *k̂*), a_{x,k}=f₃ (y *k̂*) und jₖ=f₄ (y *k̂*) mit einer Folge von flachen Ausgaben y *k̂* entsprechend dem Zeitschritt k und der anfänglichen oder "Null"-Folge des flachen Ausgangs y *k̂* entsprechend dem Anfangswert beim Schritt n. Die Beschränkung der Beschleunigung hängt von der Wahl der Beschränkungen im Planer für Bedingungen und Beschränkungen 5 ab und wird nicht nur durch die Kreisbeschränkungen eingeschränkt.

Die betrachtete flachheits-basierte modellprädiktive Abstands- und Geschwindigkeitsregelung 2 wird bevorzugt mit Hilfe des Open-Sourceoptimalen quadratischen Lösers qrqp realisiert, ist aber nicht auf diesen Solver beschränkt und kann auch mit anderen quadratischen oder nichtlinearen Solvern gelöst werden. Der Fahrwiderstand des Fahrzeugs aufgrund des Luftwiderstands, der Schwerkraft und der Straßenneigung kann direkt in das dynamische Modell oder in die Grenzen der Nebenbedingungen einbezogen werden, wie es z.B. im Forward-Backward Geschwindigkeitsplaner 1 der Fall ist.

Für MPC mit qrqp-Löser mit 50 ms Abtastzeit und N=20 beträgt die Berechnungszeit beispielsweise 10,7 ms.

Die Erfindung gibt somit einen adaptiven hybriden Geschwindigkeitsplaner mit Abstandsregelung an, der auch für Elektrofahrzeuge (BEV) geeignet ist.

Der flexible adaptive hybride Geschwindigkeitsplaner umfasst vorzugsweise einen schnellen und einfachen Vorwärts-Rückwärts-Geschwindigkeitsplaner 1 und Open-Source-basiertem optimalen Energie-Geschwindigkeitsplaner 2 mit verschiedenen einfach einstellbaren Komfort- und Fahrerfähigkeits-basierten Einschränkungen 5, stabilisiert durch eine modellprädiktive Abstands- und Geschwindigkeitsregelung 3, die in der Lage ist, eine Abstandsregelung zwischen dem eigenen Fahrzeug 9 und einem vorausfahrenden Fahrzeug 10 zu gewährleisten.

### Bezugszeichenliste

- 1: Makroplaner
- 2: Mesoplaner
- 3: Mikroplaner
- 4: Geschwindigkeitsplaner
- 5: Bedingungen und Begrenzungen
- 6: Fahrbahnbedingungen und Fahrbahnregulierungen
- 7: Fahrer- und komfortorientierte Begrenzungen
- 8: Antriebsstrangbegrenzungen
- 9: Eigenes Fahrzeug
- 10: Vorausfahrendes Fahrzeug

## Patentansprüche

1. Verfahren zur Geschwindigkeitsregelung eines bodengebundenen Fahrzeugs, wobei ein Geschwindigkeitsplaner (4) einen Makroplaner (1) umfasst, zur schnellen Vorwärts-Rückwärts-Geschwindigkeitsplanung und einen Mesoplaner (2) umfasst, zur Optimierung der Fahrzeit und des Energieverbrauchs mit einem Optimierungslöser, wobei ein Abstandsplaner einen Mikroplaner (3) umfasst, zur Abstandsregelung des Abstands zu einem vorausfahrenden Fahrzeug, wobei der Mikroplaner (3) eine modellprädikative Regelung (MPC) ist, wobei der Mikroplaner (3) eine Abstandsregelung ist und den Abstand vom eigenen Fahrzeug (9) zum vorausfahrenden Fahrzeug (10) berücksichtigt, wobei wahlweise ein Geschwindigkeitssollwert vom Makroplaner (1) berechnet wird oder vom Mesoplaner (2) berechnet wird, wobei danach der Geschwindigkeitssollwert vom Mikroplaner (3) optimiert wird, um einen finalen Geschwindigkeitssollwert auszugeben, wobei das bodengebundene Fahrzeug daraufhin mit dem finalen Geschwindigkeitssollwert betrieben wird, **dadurch gekennzeichnet, dass** der Geschwindigkeitsplaner (4) einen Makroplaner (1) umfasst, zur schnellen Vorwärts-Rückwärts-Geschwindigkeitsplanung, wobei der Mesoplaner (2) einen Standard-Optimierungslöser verwendet, nämlich einen Open-Source-Optimierungslöser, wobei der Makroplaner (1) und der Mesoplaner (2) zusammen den Geschwindigkeitsplaner (4) bilden, wobei der Geschwindigkeitsplaner (4), nämlich der Makroplaner (1) und/oder der Mesoplaner (2), dazu eingerichtet ist, Bedingungen und Begrenzungen (5) zu berücksichtigen, nämlich Fahrbahnbedingungen (6) und Fahrerbedingungen (7) und Antriebsstrangbedingungen (8) des bodengebundenen Fahrzeugs, wobei die Bedingungen und Begrenzungen (5) für den Geschwindigkeitsplaner (4) eine Reibung (fₜᵢᵣₑ), die auf der Grundlage von Messungen geschätzt wird, und ein erlerntes Verhalten eines Fahrers (D) umfassen.

2. Verfahren nach zumindest einem der vorhergehenden Ansprüche,
**dadurch gekennzeichnet, dass** der Mikroplaner (3) einen Standard-Optimierungslöser verwendet, insbesondere einen Open-Source-Optimierungslöser.

3. Verfahren nach zumindest einem der vorhergehenden Ansprüche,
**dadurch gekennzeichnet, dass** der Mikroplaner (3) eine Single-Shoot-Formulierung und/oder eine Multiple-Shoot-Formulierung verwendet und/oder dass der Mikroplaner (3) eine flachheits-basierte Formulierung verwendet, wobei eine Systemdynamik aus Nebenbedingungen eliminiert ist, und/oder dass der Mikroplaner (3) als embedded software eingerichtet ist.

4. Verfahren nach zumindest einem der vorhergehenden Ansprüche,
**dadurch gekennzeichnet, dass** der finale Geschwindigkeitssollwert für ein selbstfahrendes Elektrofahrzeug (BEV) oder für ein Fahrzeug mit adaptiver Geschwindigkeitsregelung (ACC) bestimmt wird.

5. Regelungsvorrichtung zur Geschwindigkeitsregelung eines bodengebundenen Fahrzeugs, wobei die Regelungsvorrichtung dazu eingerichtet ist, ein Verfahren nach zumindest einem der vorhergehenden Ansprüche auszuführen.

## Claims

1. Method for speed control of a ground-based vehicle, wherein a speed planner (4) comprises a macro-planner (1), for the rapid forward-backward speed planning, and comprises a meso-planner (2), for optimizing the driving time and the energy consumption using an optimization solver, wherein a distance planner comprises a micro-planner (3), for distance control of the distance to a vehicle driving ahead, wherein the micro-planner (3) is a model-predictive control (MPC), wherein the micro-planner (3) is a distance control and takes into consideration the distance from the ego vehicle (9) to the vehicle (10) driving ahead, wherein optionally a speed setpoint value is calculated by the macro-planner (1) or is calculated by the meso-planner (2), wherein then the speed setpoint value is optimized by the micro-planner (3) in order to output a final speed setpoint value, wherein the ground-based vehicle is thereupon operated using the final speed setpoint value, **characterized in that** the speed planner (4) comprises a macro planner (1) for fast forward-backward speed planning, wherein the meso planner (2) uses a standard optimization solver, namely an open-source optimization solver, wherein the macro planner (1) and the meso planner (2) together form the speed planner (4), wherein
the speed planner (4), namely the macro-planner (1) and/or the meso-planner (2), is configured to take into consideration conditions and limits (5), namely roadway conditions (6) and driver conditions (7) and drivetrain conditions (8) of the ground-based vehicle, wherein the conditions and limitations (5) for the speed planner (4) include friction (fₜᵢᵣₑ) estimated based on measurements and learned behavior of a driver (D).

2. Method according to at least one of the preceding claims,
**characterized in that** the micro-planner (3) uses a standard optimization solver, in particular an open source optimization solver.

3. Method according to at least one of the preceding claims,
**characterized in that** the micro-planner (3) uses a single-shoot formulation and/or a multiple-shoot formulation and/or **in that** the micro-planner (3) uses a flatness-based formulation, wherein a system dynamic is eliminated from secondary conditions, and/or **in that** the micro-planner (3) is configured as embedded software.

4. Method according to at least one of the preceding claims,
**characterized in that** the final speed setpoint value is determined for a self-propelled electric vehicle (BEV) or for a vehicle having adaptive cruise control (ACC).

5. Control device for speed control of a ground-based vehicle, wherein the control device is configured to carry out a method according to at least one of the preceding claims.

## Revendications

1. Procédé de contrôle de vitesse d'un véhicule terrestre, un planificateur de vitesse (4) comprenant un macro-planificateur (1) pour la planification rapide de la vitesse avant-arrière et un méso-planificateur (2) pour optimiser le temps de trajet et la consommation d'énergie avec un solveur d'optimisation, un planificateur de distance comprenant un micro-planificateur (3) pour le contrôle de distance par rapport à un véhicule précédent, le micro-planificateur (3) étant un contrôle prédictif de modèle (MPC), le micro-planificateur (3) étant un contrôle de distance et tenant compte de la distance entre le véhicule (9) lui-même et le véhicule qui le précède (10), une valeur de consigne de vitesse étant calculée au choix par le macro-planificateur (1) ou par le méso-planificateur (2), la valeur de consigne de vitesse étant ensuite optimisée par le micro-planificateur (3) pour fournir une valeur de consigne de vitesse finale, le véhicule terrestre fonctionnant alors avec la valeur de consigne de vitesse finale, **caractérisé en ce que** le planificateur de vitesse (4) comprend un macro-planificateur (1) pour la planification rapide de la vitesse avant-arrière, le méso-planificateur (2) utilisant un solveur d'optimisation standard, à savoir un solveur d'optimisation open source, le macro-planificateur (1) et le méso-planificateur (2) formant ensemble le planificateur de vitesse (4), le planificateur de vitesse (4), à savoir le macro-planificateur (1) et/ou le méso-planificateur (2), étant mis au point pour tenir compte des conditions et des limites (5), à savoir des conditions de la chaussée (6) et des conditions du conducteur (7) et des conditions de chaîne cinématique (8) du véhicule terrestre, les conditions et limites (5) pour le planificateur de vitesse (4) comprenant un frottement (fₚₙₑᵤ) estimé sur la base de mesures et un comportement appris d'un conducteur (D).

2. Procédé selon au moins l'une des revendications précédentes, **caractérisé en ce que** le micro-planificateur (3) utilise un solveur d'optimisation standard, en particulier un solveur d'optimisation open source.

3. Procédé selon au moins l'une des revendications précédentes, **caractérisé en ce que** le micro-planificateur (3) utilise une formulation à tir unique et/ou une formulation à tirs multiples et/ou que le micro-planificateur (3) utilise une formulation basée sur la planéité, une dynamique du système issue de contraintes étant éliminée et/ou que le micro-planificateur (3) est mis au point comme un logiciel intégré.

4. Procédé selon au moins l'une des revendications précédentes, **caractérisé en ce que** la valeur de consigne de vitesse finale est déterminée pour un véhicule électrique autonome (BEV) ou pour un véhicule à régulateur de vitesse adaptatif (ACC).

5. Dispositif de contrôle pour le contrôle de la vitesse d'un véhicule terrestre, le dispositif de contrôle étant mis au point pour exécuter un procédé selon au moins l'une des revendications précédentes.
